# EUROPEAN PATENT APPLICATION

(11) **EP 1 463 145 A1**
(43) Date of publication of application: **29.09.2004**
(21) Application number: 04004560.1
(22) Date of filing: 27.02.2004
(51) Int. Cl.: H01Q 1/24, H01Q 1/12, F16C 11/10

(54) **Antenna device**

(30) Priority: 24.03.2003 JP 2003079494
(71) Applicant: Mitsumi Electric Co., Ltd., Tama-Shi, Tokyo (JP)
(72) Inventor: Noro, Junichi, Mitsumi Electric Co., Ltd., Iizuka Iitagawa-machi Minamiakita, Akita (JP); Sasaki, Kumeo, Mitsumi Electric Co., Ltd., Iizuka Iitagawa-machi Minamiakita, Akita (JP)
(74) Representative: Grünecker, Kinkeldey, Stockmair & Schwanhäusser Anwaltssozietät

(57) **Abstract**

To provide an antenna device which can be freely adjusted in angular position so that an optimum sensitivity of an antenna element may be obtained.

The antenna device includes an antenna element, an antenna unit having a bottom cover and a top cover which covers the antenna element, and an antenna base to be fixed to a desired plane for installation. The antenna unit and the antenna base are connected to each other by means of an angle adjusting mechanism employing slidable bearings and having free stop function. The relative angle between these antenna unit and antenna base can be freely adjusted.

## Description

### BACKGROUND OF THE INVENTION

### 1. Field of the Invention

The present invention relates to an antenna device, and more particularly to the antenna device in which a favorable sensitivity can be assured.

### 2. Description of the related art

A directional sensitivity has been omni-directional in a conventional antenna device. However, when the antenna device has been actually installed for use, it has been difficult to obtain an optimum sensitivity, due to an obstacle or a mounting angle. Moreover, because installation of the antenna device is conducted by fixing a bottom face of an antenna case to a flat plane of a place for installation, it would be impossible to use the antenna device with an antenna element tilted in a direction toward a satellite. Under the circumstances, there has been developed such an antenna device that an antenna unit and an antenna base are connected to each other by means of an angle adjusting mechanism. The related art is published by Japanese Patent Publication No. JP-A-7-240617.

As the above mentioned angle adjusting mechanism, a mechanism employing hinges and plungers has been heretofore adopted. However, because it has been neces sary to purchase the hinges from a hinge manufacturer, an increase of production cost has been incurred, and flexibility of design has been also restricted.

On the other hand, the plunger employs springs and pins or balls. In case where the springs and pins or balls are used, there may occur necessity of using the springs and pins having large sizes in order to give a large torque, and this will incur upsizing of the antenna device. Moreover, because this method of adjustment is conducted by adjusting and fixing the antenna unit at a constant angle interval such as ten degree or fifteen degree, this angle adjusting mechanism is not suitable for a particular use, in case where free-stop function is required.

### SUMMARY OF THE INVENTION

The present invention has been made in view of the above described problems, and an object of the invention is to provide an antenna device capable of freely adjusting angles to obtain an optimum sensitivity, even after the antenna device has been installed inside a vehicle room of an automobile, for example.

In order to attain the above described object, there is provided according to the invention, an antenna device comprising an antenna element, an antenna unit including a bottom cover and a top cover in which the antenna element is contained, and an antenna base to be fixed to a desired plane for installation, characterized in that the aforesaid antenna unit and the aforesaid antenna base are connected to each other by means of an angle adjusting mechanism which has free stop function employing slidable bearings in such a manner that a relative angle between the antenna unit and the antenna base can be adjusted.

In the antenna device according to the invention, the relative angle between the antenna case and the antenna base canbe freely adjusted by means of the angle adjusting mechanism so that the optimum sensitivity of the antenna element can be obtained.

### BRIEF DESCRIPTION OF THE DRAWINGS

Fig. 1 is a side view of an antenna device to which the invention is applied.
Fig. 2 is an exploded side'view showing a mounting structure of an antenna unit to an antenna base.
Fig. 3isaplanviewofanangleadjustingmechanism showing its structure in an exploded manner.
Fig. 4 is a front view of the angle adjusting mechanism showing its structure in an exploded manner.

### DESCRIPTION OF THE PREFERRED EMBODIMENTS

Now, the antenna device according to the invention will be described in detail referring to the attached drawings.

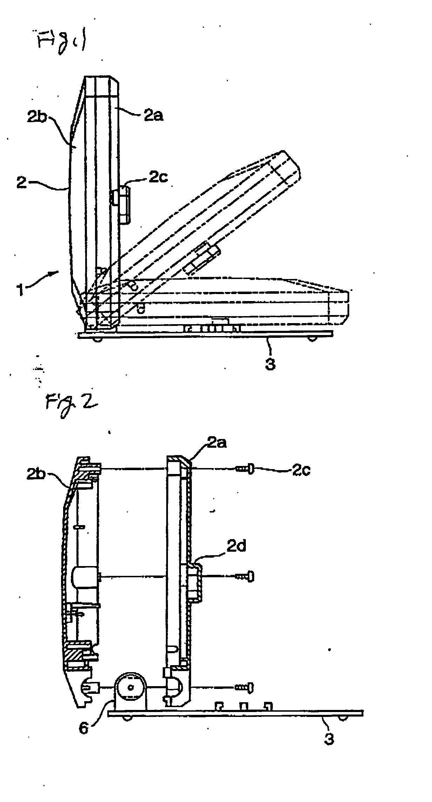

Fig. 1 is a view showing an outer appearance of an antenna device 1 to which the invention is applied. The antenna device 1 in this embodiment is attached to a desired flat plane inside an automobile for example, preferably to a flat plane near a window, and receives electric waves for transmitting various signals such as GPS signals, satellite radio broadcasting signals, cellular telephone signals.

This antenna device 1 includes an antenna element having directivity in a direction of the zenith, and an antenna unit 2 which contains this antenna element. The antenna unit 2 may contain, besides the antenna element, a circuit board carrying a low noise amplifier (LNA) for amplifying the signals received by the antenna element.

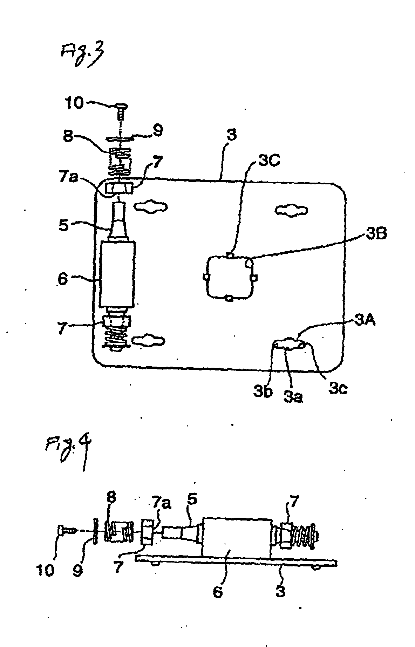

As shown in Fig. 2, the antenna unit 2 in this embodiment has a top cover 2b on which the antenna element, is placed, and a bottom cover 2a which covers the antenna element. Both the covers are fastened to each other by means of small screws 2c.

The antenna device 1 further includes an antenna base 3 which is fixed to a desired plane for installation. As shown in Fig. 3, hook holes 3A are formed in the antenna base 3 for enabling the antenna base 3 to be mounted on a wall. Each of the hook holes 3A has a large diameter portion 3a for a hook (not shown in the drawings) provided on the wall to be inserted, and narrow slit portions 3b, 3c which are formed at both sides of the large diameter portion. By inserting the hook from the large diameter portion 3a and sliding it to either of the slit portions 3b, 3c, the antenna device can be mounted on the wall preventing an unexpected drop. Because the slit portions 3b, 3c are formed at both sides of the large diameter portion 3a, it is possible to mount the antenna device 1 on the wall in either direction of upward and downward.

The antenna unit 2 including the above described bottom cover 2a and the top cover 2b is connected to the antenna base 3 by way of an angle adjusting mechanism. This angle adjusting mechanism will be described hereunder.

The angle adjusting mechanism according to the invention has free stop function employing slidable bearings. In a specific structure of the angle adjusting mechanism, a support part 6 having rotary shafts 5 which are projected from both sides thereof is fixed to the antenna base 3, as shown in Figs. 3 and 4. Respective peripheral faces of these rotary shafts 5 are inclined in such a manner that the rotary shafts may be gradually reduced in diameter toward their tip ends.

Slidable bearings 7 respectively having holes 7a which are formed to have inclined faces in correspondence with the outer peripheral faces of the rotary shafts 5 are fitted over these rotary shafts 5. Compression springs 8 and washers 9 are fitted over the rotary shafts outside the slidable bearings 7, and fixed by screws. The antenna unit 2 is fastened to these bearings 7, and angularly adjusted at a desired relative angle with respect to the antenna base 3 following rotation of these slidable bearings.

Because the slidable bearings 7 are pressed with the above mentioned compression springs 8, they will not rotate unless an outer force is applied, and therefore, will be maintained in a fixed state. By contrast, when a force is applied to the antenna unit 2, the slidable bearings 7 will be rotated and adj usted at a desired angle. On this occasion, the adjustment and fixing at a constant angle interval will not be conducted, but free angle adjustment according to the free stop function can be performed.

The relative angle of the antenna unit 2 with respect to the antenna base 3 herein means an angle which is formed between a face defined by a bottom face of the bottom cover 2a of the antenna unit 2 and a face defined by a top face of the antenna base 3. In this embodiment, the antenna unit 2 and the antenna base 3 are connected to each other so that this angle can be adjusted in a range from 0 to 90 degree by means of the above described angle adjusting mechanism.

The antenna base 3 can be fixed to a desired flat plane by various known means such as a double-faced tape, bonding agent, small screws, etc. In the simplest way, a usermaymanually adjust the relative angle of the antenna unit 2 with respect to the antenna base 3, after he has attached the antenna base 3 to the desired flat plane. In case where this antenna device 1 is an antenna device for receiving the satellite broadcasting signals, the user can freely adjust the relative angle, utilizing the free stop function, to the optimum angle at which the antenna element is most sensitive, while he himself confirms quality of sounds of audio information which has been actually received.

The bottom cover 2a of the antenna unit 2 is further provided with a projected part 2d substantially at the center thereof, and on the other hand, the antenna base 3 is formed with a dented part 3B corresponding to this projected part 2d. Still further, float preventing hooks 3C are formed around this dented part 3B. Therefore, when the antenna unit 2 has been folded to be stored, the above mentioned projected part 2d will be received in the dented part 3B, and locked by the float preventing hooks 3C at its periphery, thus preventing unexpected open or float.

As described herein above, the antenna device according to the invention is provided with the angle adjusting mechanism which can freely adjust the relative angle between the antenna unit and the antenna base, and therefore, it is possible to adjust the angle of the antenna unit so that the optimum sensitivity of the antenna element can be obtained.

## Claims

1. An antenna device comprising:
an antenna element;
an antenna unit, including a cover in which the antenna element is contained; and
an antenna base to be fixed to an installation surface on which the antenna device is installed;
wherein the antenna unit and the antenna base are connected to each other by an angle adjuster which has free stop function employing a slidable bearing such that a relative angle between the antenna unit and the antenna base can be adjusted.

2. The antenna device according to claim 1, wherein:
the angle adjuster comprises, a support part and a rotary shaft projected from the support shaft and fitted with the bearing; and
the bearing are urged by an elastic member in a first direction parallel to the rotary shaft.

3. The antenna device according to claim 2, wherein an outer peripheral face of the rotary shaft is formed as an inclined face so that the rotary shaft may be gradually reduced in diameter toward its tip end.

4. The antenna device according to claim 2, wherein the bearing is formed with a hole which has an inclined face in correspondence with the outer peripheral face of the rotary shaft.

5. The antenna device according to claims 2, wherein the elastic member is a compression spring urging the bearing toward the support part.

6. An antenna device comprising:
an antenna element;
an antenna unit, including a cover in which the antenna element is contained;
an antenna base to be fixed to a installation face on which is the antenna device is installed; and
an angle adjuster including:
a support part formed on the antenna base;
a rotary shaft projected from the support part; a slidable bearing, fitted over the rotary shaft; and
an elastic member which urge the bearing in a first direction which is parallel to the rotary shaft;
wherein the antenna unit is fitted to the bearing, and the antenna unit and the antenna base are connected to eachother such that a relative angle between the antenna unit and the antenna base can be adjusted in a free stop manner.

7. The antenna device according to claim 1, wherein:
the antenna unit comprises, a first face to be opposed to the antenna base and a projection provided on the first face; and
the antenna base comprises, a dented part to be fitted with the projection, and a hook formed around the dented part to retain the antenna unit on the antenna base.
